(19) Europäisches Patentamt
European Patent Office
Office européen des brevets

(11) Veröffentlichungsnummer: **0 392 357 B1**

(12) # EUROPÄISCHE PATENTSCHRIFT

(45) Veröffentlichungstag der Patentschrift: **28.06.95**

(51) Int. Cl.[6]: **C08K 7/14**, C08L 67/02, //(C08L67/02,51:00,25:12)

(21) Anmeldenummer: **90106522.7**

(22) Anmeldetag: **05.04.90**

(54) **Glasfaserverstärkte thermoplastische Formmassen auf der Basis von Polyestern und Pfropfpolymerisaten.**

(30) Priorität: **11.04.89 DE 3911828**

(43) Veröffentlichungstag der Anmeldung: **17.10.90 Patentblatt 90/42**

(45) Bekanntmachung des Hinweises auf die Patenterteilung: **28.06.95 Patentblatt 95/26**

(84) Benannte Vertragsstaaten: **BE DE FR GB NL**

(56) Entgegenhaltungen:
**EP-A- 0 297 365**
**EP-A- 0 310 956**
**DE-A- 3 733 839**

(73) Patentinhaber: **BASF Aktiengesellschaft**
**Carl-Bosch-Strasse 38**
**D-67063 Ludwigshafen (DE)**

(72) Erfinder: **Mc Kee, Graham Edmund, Dr.**
**Kastanienweg 8**
**D-6940 Weinheim (DE)**
Erfinder: **Knoll, Manfred**
**Pfrimmstrasse 1**
**D-6521 Wachenheim (DE)**
Erfinder: **Kolm, Peter**
**Weinstrasse 153**
**D-6730 Neustadt (DE)**
Erfinder: **Lausberg, Dietrich, Dr.**
**Nachtigalstrasse 32a**
**D-6700 Ludwigshafen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 392 357 B1

## Beschreibung

Die Erfindung betrifft thermoplastische Formmassen, enthaltend als wesentliche Komponenten

A) 45 bis 90 Gew.% einer Mischung aus

$a_1$) 50 bis 80 Gew.% einer Mischung aus

$a_{11}$) 60 bis 99 Gew.%, bezogen auf $a_{11}$ + $a_{12}$), Polybutylenterephthalat und

$a_{12}$) 1 bis 40 Gew.%, bezogen auf $a_{11}$ + $a_{12}$), Polyethylenterephthalat,

$a_2$) 10 bis 25 Gew.% eines Pfropfpolymerisats aufgebaut aus

$a_{21}$) 50 bis 90 Gew.% einer Pfropfgrundlage aus einem kautschukelastischen Polymeren auf Basis von

$a_{211}$) 75 bis 99,9 Gew.% eines $C_2$-$C_{10}$-Alkylacrylats und

$a_{212}$) 0,1 bis 5 Gew.% eines polyfunktionellen Monomeren mit mindestens zwei olefinischen, nicht konjugierten Doppelbindungen und

$a_{213}$) 0 bis 24,9 Gew.% weiterer copolymerisierbarer Monomerer, und

$a_{22}$) 10 bis 50 Gew.% einer Pfropfauflage aus

$a_{221}$) 50 bis 90 Gew.% Styrol oder substituierten Styrolen der allgemeinen Formel I

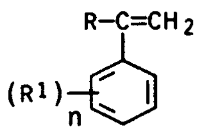

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und

$a_{222}$) 10 bis 49 Gew.% Acrylnitril oder Methacrylnitril oder deren Mischungen,

$a_3$) 10 bis 25 Gew.% eines Copolymerisats aus

$a_{31}$) 50 bis 90 Gew.% Styrol oder substituierten Styrolen der allgemeinen Formel I oder deren Mischungen und

$a_{32}$) 10 bis 49 Gew.% Acrylnitril oder Methacrylnitril oder deren Mischungen, und

5 bis 50 Gew.% Glasfasern.

Außerdem betrifft die Erfindung die Verwendung derartiger Formmassen zur Herstellung von Formkörpern und Formkörper, die aus den erfindungsgemäßen Formmassen als wesentlichen Komponenten erhältlich sind.

In der DE-B-27 58 497 werden thermoplastische Formmassen auf der Basis von Polyestern und modifizierten Styrol/Acrylnitril (SAN)-Copolymeren beschrieben, wobei als Modifizierungsmittel Acrylester und/oder $\alpha$-Methylstyrol eingesetzt werden. In den Beispielen werden sogenannte ASA-Polymere als modifizierte SAN-Polymere eingesetzt. Falls in diesen Massen das modifizierte SAN-Polymere die Hauptkomponente darstellt, lassen sich vorteilhaft Folien daraus herstellen. Die mechanischen Eigenschaften sind jedoch insgesamt noch nicht voll zufriedenstellend, insbesondere im Hinblick auf die Schlagzähigkeit und Biegefestigkeit. Auch die Stabilität der Eigenschaften nach längerer Lagerung bei höheren Temperaturen ist nicht befriedigend.

In der DE-B 22 55 654 werden Mischungen aus Polybutylenterephthalat und Polyethylenterephthalat beschrieben; es finden sich jedoch keine Hinweise auf die erfindungsgemäß verwendeten Pfropf- und Copolymerisate.

Der vorliegenden Erfindung lag daher die Aufgabe zugrunde, thermoplastische Formmassen auf der Basis von Polyestern und Pfropfpolymeren zur Verfügung zu stellen, die die vorstehend beschriebenen Nachteile nicht aufweisen. Insbesondere sollte auch eine zufriedenstellende Langzeitstabilität der mechanischen Eigenschaften bei erhöhten Temperaturen erreicht werden.

Diese Aufgabe wird erfindungsgemäß durch die eingangs definierten thermoplastischen Formmassen gelöst.

Als Komponente A enthalten die erfindungsgemäßen Formmassen 45 bis 90, insbesondere 55 bis 90 und besonders bevorzugt 60 bis 85 Gew.% einer Mischung aus

$a_1$) 50 bis 80 Gew.% einer Mischung aus

$a_{11}$) 60 bis 99 vorzugsweise 75 bis 97 Gew.%, bezogen auf $A_{11}$ + $a_{12}$), Polybutylenterephthalat und

$a_{12}$) 1 bis 40 vorzugsweise 3 bis 25 Gew.%, bezogen auf $a_{11}$ + $a_{12}$), Polyethylenterephthalat

$a_2$) 10 bis 25 Gew.% eines Pfropfpolymerisats und

$a_3$) 10 bis 25 Gew.% eines Styrol-(Meth)-Acrylnitril-Copolymerisats.

Die in den erfindungsgemäßen Formmassen enthaltenen Polyester $a_{11}$ und $a_{12}$ sind an sich bekannt.

Die Herstellung der Polyester kann durch Reaktion von Terephthalsäure, deren Estern oder anderer esterbildender Derivate mit 1,4-Butandiol bzw. 1,2-Ethandiol in an sich bekannter Weise erfolgen.

Bis zu 20 mol% der Terephthalsäure können durch andere Dicarbonsäuren ersetzt werden. Nur beispielsweise seien hier Naphthalindicarbonsäuren, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Auch bis zu 20 mol% der Dihydroxyverbindungen 1,4-Butandiol bzw. 1,2-Ethandiol können durch andere Dihydroxyverbindungen, z.B. 1,4-Butendiol, 1,6-Hexandiol, 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben ersetzt werden.

Die Viskositätszahl der Polyester $a_{11}$ bzw. $a_{12}$, gemessen an einer 0,5 gew.%igen Lösung in einem Phenol/o-Dichlorbenzolgemisch (Gewichtsverhältnis 1:1) bei 25 °C, liegt im allgemeinen im Bereich von 50 - 250 $cm^3/g$, vorzugsweise von 70 - 170 $cm^3/g$.

Der Anteil der Polyester $a_1$) an der Komponente A beträgt 50 bis 80, vorzugsweise 50 bis 75 und insbesondere 50 bis 70 Gew.%, bezogen auf das Gesamtgewicht der Komponenten $a_1$) + $a_2$) + $a_3$).

Das Pfropfpolymerisat $a_2$), welches 10 bis 25, insbesondere 12 bis 25, besonders bevorzugt 12 bis 20 Gew.% der Komponente A ausmacht, ist aufgebaut aus

$a_{21}$) 50 bis 90 Gew.% einer Pfropfgrundlage auf Basis von

$a_{211}$) 75 bis 99,9 Gew.% eines $C_2$-$C_{10}$-Alkylacrylats

$a_{212}$) 0,1 bis 5 Gew.% eines polyfunktionellen Monomeren mit mindestens zwei olefinischen, nicht konjugierten Doppelbindungen, und

$a_{213}$) 0 bis 24,9 Gew.% weiterer copolymerisierbarer Monomerer, und

$a_{22}$) 10 bis 50 Gew.% einer Pfropfauflage aus

$a_{221}$) 50 bis 90 Gew.% Styrol oder substituierten Styrolen der allgemeinen Formel I oder deren Mischungen, und

$a_{222}$) 10 bis 50 Gew.% Acrylnitril oder Methacrylnitril oder deren Mischungen,

Bei der Komponente $a_{21}$) handelt es sich um ein Elastomeres, welches eine Glasübergangstemperatur von unter -20, insbesondere unter -30 °C aufweist.

Für die Herstellung des Elastomeren werden als Hauptmonomere $a_{211}$) Ester der Acrylsäure mit 2 bis 10 C-Atomen, insbesondere 4 bis 8 C-Atomen eingesetzt. Als besonders bevorzugte Monomere seien hier iso- und n-Butylacrylat sowie 2-Ethylhexylacrylat genannt, von denen die beiden letztgenannten besonders bevorzugt werden.

Neben diesen Estern der Acrylsäure werden 0,1 bis 5, insbesondere 1 bis 4 Gew.% bezogen auf das Gesamtgewicht $a_{211}$ + $a_{212}$, eines polyfunktionellen Monomeren mit mindestens zwei olefinischen Doppelbindungen eingesetzt. Von diesen werden difunktionelle Verbindungen, d.h. Verbindungen mit zwei nicht konjugierten Doppelbindungen bevorzugt verwendet. Beispielsweise seien hier Divinylbenzol, Diallylfumarat, Diallylphthalat, Triallylcyanurat, Triallylisocyanurat, Tricyclodecenylacrylat und Dihydrodicyclopentadienylacrylat genannt, von denen die beiden letzten besonders bevorzugt werden.

Neben den Monomeren $a_{211}$) und $a_{212}$) können am Aufbau der Pfropfgrundlage noch bis zu 24,9, vorzugsweise bis zu 20 Gew.% weiterer copolymerisierbarer Monomerer, vorzugsweise Butadien-1.3, Styrol, $\alpha$-Methylstyrol, Acrylnitril, Methacrylnitril und $C_1$-$C_8$-Alkylester der Methacrylsäure oder Mischungen dieser Monomeren, beteiligt sein.

Verfahren zur Herstellung der Pfropfgrundlage $a_{21}$) sind an sich bekannt und z.B. in der DE-B 1 260 135 beschrieben. Entsprechende Produkte sind auch kommerziell im Handel erhältlich.

Als besonders vorteilhaft hat sich in einigen Fällen die Herstellung durch Emulsionspolymerisation erwiesen.

Der Anteil der Pfropfgrundlage $a_{21}$) am Pfropfpolymerisat $a_2$) beträgt 50 bis 90, vorzugsweise 55 bis 85 und insbesondere 60 bis 80 Gew.% bezogen auf das Gesamtgewicht von $a_2$).

Auf die Pfropfgrundlage $a_{21}$) ist eine Pfropfhülle $a_{22}$) aufgepfropft, die durch Copolymerisation von

$a_{221}$) 50 bis 90, vorzugsweise 60 bis 90 und insbesondere 65 bis 80 Gew.% Styrol oder substitierten Styrolen der allgemeinen Formel I

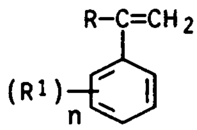

(I)

wobei R Alkylreste mit 1 bis 8 C-Atomen, Wasserstoffatome oder Halogenatome und $R^1$ Alkylreste mit 1 bis 8 C-Atomen oder Halogenatome darstellen und n den Wert 0, 1, 2 oder 3 hat, und

$a_{222}$) 10 bis 50, vorzugsweise 10 bis 40 und insbesondere 20 bis 35 Gew.% Acrylnitril oder Methacrylnitril oder deren Mischungen erhältlich ist.

Beispiele für substituierte Styrole sind α-Methylstyrol, p-Methylstyrol, p-Chlorstyrol und p-Chlor-α-Methylstyrol; Styrol und α-Methylstyrol werden als Monomere $a_{221}$ besonders bevorzugt.

Die Pfropfhülle $a_{22}$) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357 und der DE-OS 34 14 118 beschrieben ist.

Je nach den gewählten Bedingungen entsteht bei der Pfropfmischpolymerisation ein bestimmter Anteil an freien Copolymerisaten der Monomeren $a_{221}$) und $a_{222}$)

Das Pfropfmischpolymerisat ($a_{21}$ + $a_{22}$) weist im allgemeinen eine mittlere Teilchengröße von 50 bis 1000 nm, im besonderen von 80 bis 700 nm ($d_{50}$-Gewichtsmittelwert) auf. Die Bedingungen bei der Herstellung des Elastomeren $a_{21}$) und bei der Pfropfung werden daher vorzugsweise so gewählt, daß Teilchengrößen in diesem Bereich resultieren. Maßnahmen hierzu sind bekannt und z.B. in der DE-B 1 260 135 und der DE-A 28 26 925 sowie in Journal of Applied Polymer Science, Vol. 9 (1965), S. 2929 bis 2938 beschrieben. Die Teilchenvergrößerung des Latex des Elastomeren kann z.B. mittels Agglomeration bewerkstelligt werden.

Zum Pfropfpolymerisat $a_2$ zählen im Rahmen dieser Erfindung auch die bei der Pfropfmischpolymerisation zur Herstellung der Komponente $a_{22}$) entstehenden freien, nicht gepfropften Homo- und Copolymerisate.

Nachstehend seien einige bevorzugte Pfropfpolymerisate angeführt:

$a_2$/1: 60 Gew.% Pfropfgrundlage $a_{21}$) aus
  $a_{211}$) 98 Gew.% n-Butylacrylat und
  $a_{212}$) 2 Gew.% Dihydrodicyclopentadienylacrylat und 40 Gew.% Pfropfhülle $a_{22}$) aus
  $a_{221}$) 75 Gew.% Styrol und
  $a_{222}$) 25 Gew.% Acrylnitril

$a_2$/2: Pfropfgrundlage wie bei $a_2$/1, mit 5 Gew.% einer ersten Pfropfhülle aus Styrol
und
35 Gew.% einer zweiten Pfropfhülle aus
  $a_{221}$) 75 Gew.% Styrol und
  $a_{222}$) 25 Gew.% Acrylnitril

$a_2$/3: Pfropfgrundlage wie bei $a_2$/1, mit 13 Gew.% einer ersten Pfropfhülle aus Styrol und 27 Gew.% einer zweiten Pfropfhülle aus Styrol und Acrylnitril im Gewichtsverhältnis 75 : 25.

Als Komponente $a_3$) enthalten die erfindungsgemäßen Formmassen 10 bis 25, vorzugsweise 12 bis 20 Gew.% eines Copolymerisats aus

$a_{31}$) 50 bis 90, vorzugsweise 55 bis 90 und insbesondere 65 bis 80 Gew.% Styrol und/oder substituierten Styrolen der allgemeinen Formel I und

$a_{32}$) 10 bis 50, vorzugsweise 10 bis 45 und insbesondere 20 bis 35 Gew.% Acrylnitril und/oder Methacrylnitril.

Die erfindungsgemäßen Formmassen zeichnen sich durch eine gute Festigkeit, hohe Schlagzähigkeit und eine besonders gute Oberflächenstruktur der daraus hergestellten Formteile aus. Darüber hinaus sind auch die Verzugseigenschaften und die Wärmeformbeständigkeit besonders vorteilhaft.

Beispiele:

Es wurden folgende Komponenten eingesetzt:

$a_{11}$) Polybutylenterephthalat mit einer Viskositätszahl von 108 $cm^3/g$, bestimmt nach DIN 53 728, Teil 2 (Ultradur® B2550 der BASF AG)

$a_{12}$) Polyethylenterephthalat mit einer Viskositätszahl von 75 $cm^3/g$ (0,5 %ig in Phenol/o-Dichlorbenzol-(60:40) bei 25 °C)

$a_2$) Pfropfpolymerisat aus

| | |
|---|---|
| 58,8 Gew.% n-Butylacrylat<br>1,2 Gew.% Dihydrodicyclopentadienylacrylat | Pfropfgrundlage |
| 30 Gew.% Styrol<br>10 Gew.% Acrylnitril | Pfropfhülle |

hergestellt nach dem in der DE-A 24 44 584 beschriebenen Verfahren.

$a_3$) Styrol/Acrylnitril-Copolymerisat (Gew.-Verh. 65:35) mit einer Viskositätszahl von 80, gemessen in Dimethylformamid (DMF), 0,5 %ig bei 25 °C

B) Glasfasern

Daneben enthielten die Zusammensetzungen beider Beispiele noch folgende Zusatzstoffe (jeweils in Gew.%, bezogen auf das Gesamtgewicht von A) + B):

1,5 Gew.% Ruß

0,1 Gew.% Talkum

0,8 Gew.% Pentaerythritstearat

Die in der Tabelle beschriebenen Zusammensetzungen wurden aufgeschmolzen und extrudiert. Nach der Extrusion wurden im Spritzguß die für die Bestimmungen der Eigenschaften erforderlichen Testkörper hergestellt.

Die Ergebnisse der Messungen sind in der Tabelle dargestellt.

| Komponente | Beispiel 1 | Beispiel 2 (Vergleich) |
|---|---|---|
| $a_{11}$ (Gew.%) | 48 | 56 |
| $a_{12}$ (Gew.%) | 8 | - |
| $a_2$ (Gew.%) | 12 | 12 |
| $a_3$ (Gew.%) | 12 | 12 |
| B (Gew.%) | 20 | 20 |
| Gesamtarbeit $W_{50}$ [Nm] [1] | 4,5 | 2,5 |
| Oberflächenglanz (DIN 67 530) | 88 | 70 |
| Oberflächenqualität | gut Glasfasern nicht sichtbar | weniger gut Glasfasern sichtbar |
| Minimaler Fülldruck, um ein Testkästchen zu spritzen [bar] | 380 | 400 |
| Verzug am Testkästchen, gemessen an der Längsseite [mm] | 0,48 | 0,60 |
| Wärmeformbeständigkeit (°C) ISO 75, Methode A | 186 | 170 |
| Einfärbbarkeit | gut | weniger gut |

1 Durchstoßversuch nach DIN 53 443 an 2 mm Rundscheiben

Die Ergebnisse in der Tabelle zeigen deutlich, daß die erfindungsgemäßen Massen in ihrem Eigenschaftsspektrum den aus der DE-B 2 758 497 bekannten Massen überlegen sind.

## Patentansprüche

**1.** Thermoplastische Formmassen, enthaltend als wesentliche Komponenten

A) 45 bis 90 Gew.% einer Mischung aus
$a_1$) 50 bis 80 Gew.% einer Mischung aus
$a_{11}$) 60 bis 99 Gew.% bezogen auf $a_{11}$ + $a_{12}$), Polybutylenterephthalat und
$a_{12}$) 1 bis 40 Gew.%, bezogen auf $a_{11}$ + $a_{12}$), Polyethylenterephthalat,
$a_2$) 10 bis 25 Gew.% eines Pfropfpolymerisats aufgebaut aus
$a_{21}$) 50 bis 90 Gew.% einer Pfropfgrundlage aus einem kautschukelastischen Polymeren auf Basis von
$a_{211}$) 75 bis 99,9 Gew.% eines $C_2$-$C_{10}$-Alkylacrylats,
$a_{212}$) 0,1 bis 5 Gew.% eines polyfunktionellen Monomeren mit mindestens zwei olefinischen, nicht konjugierten Doppelbindungen, und
$a_{213}$) 0 bis 24,9 Gew.% weiterer copolymerisierbarer Monomerer, und
$a_{22}$) 10 bis 50 Gew.% einer Pfropfauflage aus
$a_{221}$) 50 bis 90 Gew.% Styrol oder substituierten Styrolen der allgemeinen Formel I

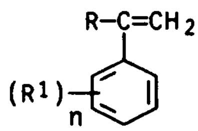

(I)

wobei R einen Alkylrest mit 1 bis 8 C-Atomen, ein Wasserstoffatom oder ein Halogenatom und $R^1$ einen Alkylrest mit 1 bis 8 C-Atomen oder ein Halogenatom darstellen und n den Wert 0, 1, 2 oder 3 hat oder deren Mischungen und
$a_{222}$) 10 bis 49 Gew.% Acrylnitril oder Methacrylnitril oder deren Mischungen
und
$a_3$) 10 bis 25 Gew.% eines Copolymerisats aus
$a_{31}$) 50 bis 90 Gew.% Styrol oder substituierten Styrolen der allgemeinen Formel I oder deren Mischungen und
$a_{32}$) 10 bis 49 Gew.% Acrylnitril oder Methacrylnitril oder deren Mischungen,
und
B) 5 bis 50 Gew.% Glasfasern.

**2.** Thermoplastische Formmassen nach Anspruch 1, enthaltend als wesentliche Komponenten
A) 55 bis 90 Gew.% einer Mischung aus
$a_1$) 50 bis 80 Gew.% einer Mischung aus
$a_{11}$) 60 bis 99 Gew.%, bezogen auf $a_{11}$ + $a_{12}$) Polybutylenterephthalat und
$a_{12}$) 1 bis 40 Gew.%, bezogen auf $a_{11}$ + $a_{12}$) Polybutylenterphthalat
$a_2$) 10 bis 25 Gew.% Pfropfpolymerisat aus
$a_{21}$) 50 bis 90 Gew.% Pfropfgrundlage auf Basis von
$a_{211}$) 75 bis 99,9 Gew.% n-Butylacrylat und/oder 2-Ethylhexylacrylat und
$a_{212}$) 0,1 bis 5 Gew.% eines difunktionellen Monomeren, und
$a_{213}$) 0 bis 24,9 Gew.% Butadien-1.3, Styrol, Acrylnitril, Methacrylnitril und/oder $C_1$-$C_8$-Methacrylsäureester, und
$a_{22}$) 10 bis 50 Gew.% einer Pfropfauflage aus
$a_{221}$) 50 bis 90 Gew.% Styrol oder $\alpha$-Methylstyrol oder deren Mischungen und
$a_{222}$) 10 bis 49 Gew.% Acrylnitril oder Methacrylnitril oder deren Mischungen.
$a_3$) 10 bis 25 Gew.% eines Copolymerisats aus
$a_{31}$) 50 bis 90 Gew.% Styrol oder $\alpha$-Methylstyrol oder deren Mischungen und
$a_{32}$) 10 bis 49 Gew.% Acrylnitril oder Methacrylnitril oder deren Mischungen,
und
B) 10 bis 40 Gew.% Glasfasern.

**3.** Verwendung der thermoplastischen Formmassen gemäß den Ansprüchen 1 und 2 zur Herstellung von Formkörpern und Formteilen.

**4.** Formkörper, erhältlich aus thermoplastischen Formmassen gemäß den Ansprüchen 1 und 2 als wesentliche Komponenten.

## Claims

1. A thermoplastic molding material containing, as essential components,
   A) from 45 to 90% by weight of a mixture of
   $a_1$) from 50 to 80% by weight of a mixture of
   $a_{11}$) from 60 to 99% by weight, based on $a_{11}$ + $a_{12}$), of polybutylene terephthalate and
   $a_{12}$) from 1 to 40% by weight, based on $a_{11}$ + $a_{12}$), of polyethylene terephthalate,
   $a_2$) from 10 to 25% by weight of a graft polymer composed of
   $a_{21}$) from 50 to 90% by weight of a grafting base of an elastomeric polymer based on
   $a_{211}$) from 75 to 99.9% by weight of a $C_2$-$C_{10}$-alkyl acrylate and
   $a_{212}$) from 0.1 to 5% by weight of a polyfunctional monomer having two or more olefinic, nonconjugated double bonds and
   $a_{213}$) from 0 to 24.9% by weight of further copolymerizable monomers, and
   $a_{22}$) from 10 to 50% by weight of a graft of
   $a_{221}$) from 50 to 90% by weight of styrene or substituted styrenes of the formula I

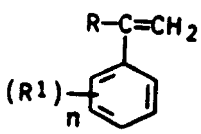

(I)

   where R is alkyl of 1 to 8 carbon atoms, hydrogen or halogen, $R^1$ is alkyl of 1 to 8 carbon atoms or halogen and n is 0, 1, 2 or 3, or a mixture thereof, and
   $a_{222}$) from 10 to 49% by weight of acrylonitrile or methacrylonitrile or a mixture thereof,
   $a_3$) from 10 to 25% by weight of a copolymer of
   $a_{31}$) from 50 to 90% by weight of styrene or substituted styrenes of the formula I or a mixture thereof and
   $a_{32}$) from 10 to 49% by weight of acrylonitrile or methacrylonitrile or a mixture thereof, and
   B) from 5 to 50% by weight of glass fibers.

2. A thermoplastic molding material as claimed in claim 1, containing, as essential components,
   A) from 55 to 90% by weight of a mixture of
   $a_1$) from 50 to 80% by weight of a mixture of
   $a_{11}$) from 60 to 99% by weight, based on $a_{11}$ + $a_{12}$), of polybutylene terephthalate and
   $a_{12}$) from 1 to 40% by weight, based on $a_{11}$ + $a_{12}$), of polyethylene terephthalate,
   $a_2$) from 10 to 25% by weight of a graft polymer of
   $a_{21}$) from 50 to 90% by weight of a grafting base consisting of
   $a_{211}$) from 75 to 99.9% by weight of n-butyl acrylate and/or 2-ethylhexyl acrylate and
   $a_{212}$) from 0.1 to 5% by weight of a bifunctional monomer and
   $a_{213}$) from 0 to 24.9% by weight of buta-1,3-diene, styrene, acrylonitrile, methacrylonitrile and/or $C_1$-$C_8$-methacrylates, and
   $a_{22}$) from 10 to 50% by weight of a graft of
   $a_{221}$) from 50 to 90% by weight of styrene or $\alpha$-methylstryene or a mixture thereof and
   $a_{222}$) from 10 to 49% by weight of acrylonitrile or methacrylonitrile or a mixture thereof,
   $a_3$) from 10 to 25% by weight of a copolymer of
   $a_{31}$) from 50 to 90% by weight of styrene or $\alpha$-methylstyrene or a mixture thereof and
   $a_{32}$) from 10 to 49% by weight of acrylonitrile or methacrylonitrile or a mixture thereof, and
   B) from 10 to 40% by weight of glass fibers.

3. Use of a thermoplastic molding material as claimed in claim 1 or 2 for the production of moldings and shaped articles.

4. A molding obtainable from a thermoplastic molding material as claimed in claim 1 or 2 as the essential component.

## Revendications

**1.** Masses à mouler thermoplastiques contenant, comme composants essentiels,

A) 45 à 90% en poids d'un mélange de

$a_1$) 50 à 80% en poids d'un mélange de

$a_{11}$) 60 à 99% en poids, par rapport à $a_{11}$ + $a_{12}$, de polytéréphtalate de butylène et

$a_{12}$) 1 à 40% en poids, par rapport à $a_{11}$ + $a_{12}$, de polytéréphtalate d'éthylène, de

$a_2$) 10 à 25% en poids d'un polymère greffé composé de

$a_{21}$) 50 à 90% en poids d'une base de greffage en un polymère ayant l'élasticité du caoutchouc, à base de

$a_{211}$) 75 à 99,9% en poids d'un acrylate d'alkyle en $C_2$-$C_{10}$,

$a_{212}$) 0,1 à 5% en poids d'un monomère polyfonctionnel comportant au moins deux doubles liaisons oléfiniques non conjuguées, et

$a_{213}$) 0 à 24,9% en poids d'autres monomères copolymérisables, et de

$a_{22}$) 10 à 50% en poids d'un greffon composé de

$a_{221}$) 50 à 90% en poids de styrène, de styrenes substitues de formule générale I

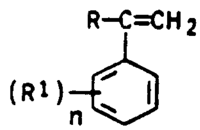

(I)

où R représente un reste alkyle à 1-8 atomes de carbone, un atome d'hydrogène ou un atome d'halogène, $R^1$ représente un reste alkyle à 1-8 atomes de carbone ou un atome d'halogène et n a la valeur 0, 1, 2 ou 3, ou de mélanges de ceux-ci, et

$a_{222}$) 10 à 49% en poids d'acrylonitrile, de méthacrylonitrile ou de mélanges de ceux-ci,

et de

$a_3$) 10 à 25% en poids d'un copolymère de

$a_{31}$) 50 à 90% en poids de styrène, de styrènes substitués de formule générale I ou de mélanges de ceux-ci, et

$a_{32}$) 10 à 49% en poids d'acrylonitrile, de methacrylonitrile ou de mélanges de ceux-ci

et

B) 5 à 50% en poids de fibres de verre.

**2.** Masses à mouler thermoplastiques selon la revendication 1 contenant, comme composants essentiels,

A) 55 à 90% en poids d'un mélange de

$a_1$) 50 à 80% en poids d'un mélange de

$a_{11}$) 60 à 99% en poids, par rapport à $a_{11}$ + $a_{12}$, de polytéréphtalate de butylène et

$a_{12}$) 1 à 40% en poids, par rapport à $a_{11}$ + $a_{12}$, de polytéréphtalate d'éthylène,

$a_2$) 10 à 25% en poids d'un polymère greffé composé de

$a_{21}$) 50 à 90% en poids d'une base de greffage à base de

$a_{211}$) 75 à 99,9% en poids d'acrylate de n-butyle et/ou d'acrylate de 2-éthylhexyle,

$a_{212}$) 0,1 à 5% en poids d'un monomère difonctionnel et

$a_{213}$) 0 à 24,9% en poids de butadiène-1,3, de styrène, d'acrylonitrile, de méthacrylonitrile et/ou d'ester d'acide méthacrylique en $C_1$-$C_8$, et

$a_{22}$) 10 à 50% en poids d'un greffon composé de

$a_{221}$) 50 à 90% en poids de styrène, d'$\alpha$-méthylstyrène ou de mélanges de ceux-ci et

$a_{222}$) 10 à 49% en poids d'acrylonitrile, de méthacrylonitrile ou de mélanges de ceux-ci,

$a_3$) 10 à 25% en poids d'un copolymère de

$a_{31}$) 50 à 90% en poids de styrène, d'$\alpha$-méthylstyrène ou de mélanges de ceux-ci, et

$a_{32}$) 10 à 49% en poids d'acrylonitrile, de méthacrylonitrile ou de mélanges de ceux-ci

et

B) 10 à 40% en poids de fibres de verre.

**3.** Utilisation des masses à mouler thermoplastiques selon la revendication 1 ou 2 pour la fabrication de corps moulés et de pièces moulées.

4. Corps moulés, obtenus à partir de masses à mouler thermoplastiques selon la revendication 1 ou 2 en tant que constituants essentiels.